# EUROPEAN PATENT SPECIFICATION

(11) **EP 3 948 524 B1**
(45) Date of publication and mention of the grant of the patent: **21.08.2024**
(21) Application number: 20730899.0
(22) Date of filing: 18.05.2020
(51) Int. Cl.: G06F 8/70, G06N 3/084, G06N 3/045

(54) **AUTOMATED IDENTIFICATION OF CODE CHANGES**
AUTOMATISIERTE IDENTIFIZIERUNG VON CODEÄNDERUNGEN
IDENTIFICATION AUTOMATISÉE DE CHANGEMENTS DE CODE

(30) Priority: 21.05.2019 US 201916418767
(43) Date of publication of application: 09.02.2022
(73) Proprietor: Google LLC, Mountain View, CA 94043 (US)
(72) Inventor: NI, Bin, Mountain View, California 94043 (US); SCHILLINGS, Benoit, Mountain View, California 94043 (US); EVANGELOPOULOS, Georgios, Mountain View, California 94043 (US); HATALSKY, Olivia, Mountain View, California 94043 (US); ZHANG, Qianyu, Mountain View, California 94043 (US); BRONEVETSKY, Grigory, Mountain View, California 94043 (US)
(74) Representative: Anderson, Oliver Ben
(86) International application number: PCT/US2020/033448
(87) International publication number: WO 2020/236744

(56) References cited:
- NGUYEN HOAN ANH ET AL: "Using Topic Model to Suggest Fine-Grained Source Code Changes", 2016 IEEE INTERNATIONAL CONFERENCE ON SOFTWARE MAINTENANCE AND EVOLUTION (ICSME), IEEE, 2 October 2016 (2016-10-02), pages 200 - 210, XP033041546, DOI: 10.1109/ICSME.2016.40
- TUFANO MICHELE ET AL: "Deep Learning Similarities from Different Representations of Source Code", 2018 IEEE/ACM 15TH INTERNATIONAL CONFERENCE ON MINING SOFTWARE REPOSITORIES (MSR), ACM, 27 May 2018 (2018-05-27), pages 542 - 553, XP033485958

## Description

### Field of the invention

The invention deals with the recommending and/or automatically effecting changes to legacy source code based on previous updates.

### Background

A software system is built upon a source code "base," which typically depends on and/or incorporates many independent software technologies, such as programming languages (e.g. Java, Python, C++), frameworks, shared libraries, run-time environments, etc. Each software technology may evolve at its own speed, and may include its own branches and/or versions. Each software technology may also depend on various other technologies. Accordingly, a source code base of a large software system can be represented with a complex dependency graph.

There are benefits to keeping software technologies up to date. Newer versions may contain critical improvements that fix security holes and/or bugs, as well as include new features. Unfortunately, the amount of resources sometimes required to keep these software technologies fresh, especially as part of a specific software system's code base, can be very large. Consequently, many software systems are not updated as often as possible. Out-of-date software technologies can lead to myriad problems, such a bugs, security vulnerabilities, lack of continuing support, *etc.*

"Using Topic Model to Suggest Fine-Grained Source Code Changes" by Nguyen Hoan Anh et al describes a model that leverages the context of change tasks in development history to suggest fine-grained code change and fix at the program statement level.

"Deep learning similarities from different representations of source code" by Michele Tufano et al describes how software engineering tasks can benefit from a Deep Learning-based approach, which can automatically learn code similarities from different representations.

### Summary

The matter for protection is defined by the claims.

Techniques are described herein for automatically identifying and recommending and/or automatically effecting changes to a legacy source code base based on updates previously made to other similar legacy code bases. Intuitively, multiple prior "migrations," or mass updates, of complex software system code bases may be analyzed to identify changes that were made. In some implementations knowledge of these changes may be preserved using machine learning and latent space embeddings. When a new software system code base that is similar to one or more of the previously-updated code bases is to be updated, these previously-implemented changes may be identified using machine learning and the previously-mentioned latent space embeddings. Once identified, these changes are automatically recommended and/or effected. By automatically identifying and recommending, and/or effecting these changes, the time and expense of manually changing numerous source code snippets to properly reflect changes to related software technologies across a dependency graph may be reduced or even eliminated.

In some implementations, one or more machine learning models such as a graph neural network ("GNN") or sequence-to-sequence model (e.g., encoder-decoder network, etc.) may be trained to generate embeddings based on source code snippets. These embeddings may capture semantic and/or syntactic properties of the source code snippets, as well as a context in which those snippets are deployed. In some implementations, these embeddings may take the form of "reference" embeddings that represent previous changes made to source code snippets during previous migrations of source code bases. Put another way, these reference embeddings map or project the previous code base changes to a latent space. These reference embeddings may then be used to identify change candidates for a new migration of a new source code base.

As a non-limiting example of how a machine learning model configured with selected aspects of the present disclosure may be trained, in some implementations, a first version source code snippet (*e.g.*, version 1.1.1) may be used to generate a data structure such as an abstract syntax tree ("AST"). The AST may represent constructs occurring in the first version source code snippet, such as variables, objects, functions, *etc.*, as well as the syntactic relationships between these components. Another AST may be generated for a second version source code snippet (*e.g.*, 1.1.2), which may be a next version or "iteration" of the first version source code snippet. The two ASTs may then be used to generate one or more data structures, such as one or more change graphs, that represent one or more changes made to update the source code snippet from the first version to the second version. In some implementations, one change graph may be generated for each change to the source code snippet during its evolution from the first version to the second version.

Once the change graph(s) are created, they may be used as training examples for training the machine learning model. In some implementations, the change graph(s) may be processed using the machine learning (e.g., GNN or sequence-to-sequence) model to generate corresponding reference embeddings. In some implementations, the change graph(s) may be labeled with information, such as change types, that is used to map the changes to respective regions in the latent space. For example, a label "change variable name" may be applied to one change, another label, "change API signature," may be applied to another change, and so on.

As more change graphs are input across the machine learning model, these labels may be used as part of a loss function that determines whether comparable changes are clustering together properly in the latent space. If an embedding generated from a change of a particular change type (e.g., "change variable name") is not sufficiently proximate to other embeddings of the same change type (e.g., is closer to embeddings of other change types), the machine learning model may be trained, e.g., using techniques such as gradient descent and back propagation. This training process may be repeated over numerous training examples until the machine learning model is able to accurately map change graphs, and more generally, data structures representing source code snippets, to regions in the latent space near other, syntactically/semantically similar data structures.

Once the machine learning model is trained it may be used during an update of a to-be-updated software system code base to identify, and in some cases automatically effect, changes to various snippets of source code in the code base. In some implementations, data associated with a first version code snippet of the to-be-updated code base may be applied as input across the trained machine learning model to generate an embedding. As during training, the data associated with the first version source code snippet can be a data structure such as an AST. Unlike during training, however, the first version source code snippet has not yet been updated to the next version. Accordingly, there is no second version source code snippet and no change graph.

Nonetheless, when the AST or other data structure generated from the first version source code snippet is processed using the machine learning (e.g., GNN or sequence-to-sequence) model, the consequent source code embedding may be proximate to reference embedding(s) in the latent space that represent change(s) made to similar (or even identical) source code snippets during prior code base migrations. In other words, the first version source code snippet is mapped to the latent space to identify changes made to similar source code in similar circumstances in the past. These change(s) can then be recommended and/or automatically effected in order to update the first version source code snippet to a second version source code snippet.

In some implementations, distances in latent space between the source code embedding and reference embedding(s) representing past source code change(s) may be used to determine how to proceed, e.g., whether to recommend a change, automatically effect the change, or even whether to not recommend the change. These spatial relationships (which may correspond to similarities) in latent space may be determined in various ways, such as using the dot product, cosine similarity, etc. As an example, if a reference embedding is within a first radius in the latent space of the source code embedding, the change represented by the embedding may be effected automatically, *e.g.*, without user confirmation. If the reference embedding is outside of the first radius but within a second radius of the source code embedding, the change represented by the embedding may be recommended to the user, but may require user confirmation. And so on. In some implementations, a score may be assigned to a candidate change based on its distance from the source code embedding, and that score may be presented to a user, *e.g.*, as a percentage match or confidence score, that helps the user to determine whether the change should be effected.

In some implementations in which the source code embedding is similarly proximate to multiple reference embeddings, changes represented by the multiple embeddings may be presented as candidate changes to a user (*e.g.*, a software engineer). In some cases in which the multiple changes do not conflict with each other, the multiple changes may simply be implemented automatically.

While change type was mentioned previously as a potential label for training data, this is not meant to be limiting. Labels indicative of other attributes may be assigned to training examples in addition to or instead of change types. For example, in some implementations, in addition to or instead of change type, change graphs (or other data structures representing changes between versions of source code) may be labeled as "good" changes, "bad" changes, "unnecessary" changes, "duplicative" changes, matching or not matching a preferred coding style, *etc*. These labels may be used in addition to or instead of change type or other types of labels to further map the latent space. Later, when a new source code embedding is generated and found to be proximate to a reference embedding labeled "bad," the change represented by the reference embedding may not be implemented or recommended.

In some implementations, a method performed by one or more processors is provided that includes: applying data associated with a first version source code snippet as input across one or more machine learning models to generate a new source code embedding in a latent space; identifying one or more reference embeddings in the latent space based on one or more distances between the one or more reference embeddings and the new source code embedding in the latent space, wherein each of the one or more reference embeddings is generated by applying data indicative of a change made to a reference first version source code snippet to yield a reference second version source code snippet, as input across one or more of the machine learning models; and based on the identified one or more reference embeddings, identifying one or more changes to be made to the first version source code snippet to create a second version source code snippet.

In various implementations, the data associated with the first version source code snippet comprises an abstract syntax tree ("AST") generated from the first version source code snippet. In various implementations, one or more of the machine learning models comprises a graph neural network ("GNN"). In various implementations, one or more changes are identified based on one or more lookup tables associated with the one or more reference embeddings.

In various implementations, the method further comprises generating output to be rendered on one or more computing devices, wherein the output, when rendered, recommends that the one or more changes be considered for the first version source code snippet. In various implementations, the method further comprises automatically effecting the one or more changes in the first version source code snippet. In various implementations, the first version source code snippet comprises a source code file.

In another aspect, a method implemented using one or more processors may include: obtaining data indicative of a change between a first version source code snippet and a second version source code snippet; labeling the data indicative of the change with a change type; applying the data indicative of the change as input across a machine learning model to generate a new embedding in a latent space; determining a distance in the latent space between the new embedding and a previous embedding in the latent space associated with the same change type; and training the machine learning model based at least in part on the distance.

In addition, some implementations include one or more processors of one or more computing devices, where the one or more processors are operable to execute instructions stored in associated memory, and where the instructions are configured to cause performance of any of the aforementioned methods. Some implementations also include one or more non-transitory computer readable storage media storing computer instructions executable by one or more processors to perform any of the aforementioned methods.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

Fig. 1 schematically depicts an example environment in which selected aspects of the present disclosure may be implemented, in accordance with various implementations.
Fig. 2 is a block diagram of an example process flow.
Fig. 3 schematically demonstrates one example of how latent space embeddings may be generated using machine learning models described here during an inference phase.
Fig. 4 schematically demonstrates one example of how latent space embeddings may be generated using machine learning models described here during a training phase.
Fig. 5 depicts a flowchart illustrating an example method according to implementations disclosed herein.
Fig. 6 depicts a flowchart illustrating another example method according to implementations disclosed herein.
Fig. 7 illustrates an example architecture of a computing device.

### Detailed Description

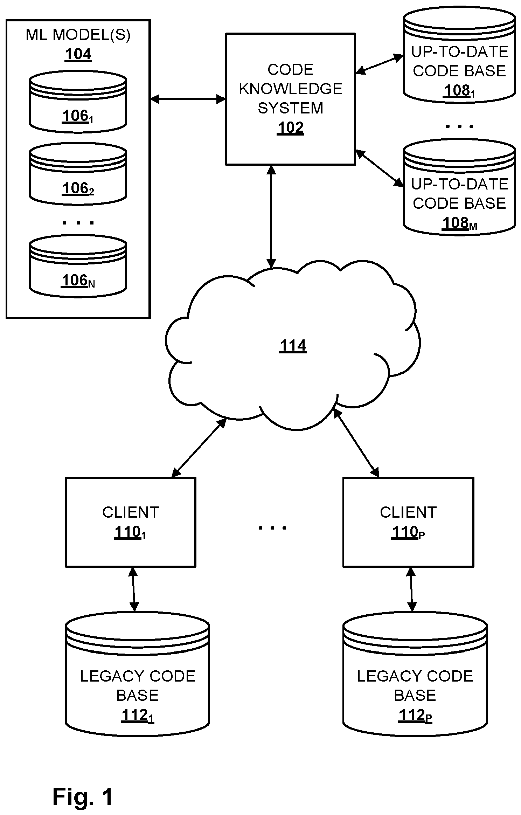

Fig. 1 schematically depicts an example environment in which selected aspects of the present disclosure may be implemented, in accordance with various implementations. Any computing devices depicted in Fig. 1 or elsewhere in the figures may include logic such as one or more microprocessors (e.g., central processing units or "CPUs", graphical processing units or "GPUs") that execute computer-readable instructions stored in memory, or other types of logic such as application-specific integrated circuits ("ASIC"), field-programmable gate arrays ("FPGA"), and so forth. Some of the systems depicted in Fig. 1, such as a code knowledge system 102, may be implemented using one or more server computing devices that form what is sometimes referred to as a "cloud infrastructure," although this is not required.

Code knowledge system 102 may be configured to perform selected aspects of the present disclosure in order to help one or more clients 110_{1-P} to update one or more corresponding legacy code bases 112_{1-P}. Each client 110 may be, for example, an entity or organization such as a business (e.g., financial institute, bank, etc.), non-profit, club, university, government agency, or any other organization that operates one or more software systems. For example, a bank may operate one or more software systems to manage the money under its control, including tracking deposits and withdrawals, tracking loans, tracking investments, and so forth. An airline may operate one or more software systems for booking/canceling/rebooking flight reservations, managing delays or cancelations of flight, managing people associated with flights, such as passengers, air crews, and ground crews, managing airport gates, and so forth.

Many of these entities' software systems may be mission critical. Even a minimal amount of downtime or malfunction can be highly disruptive or even catastrophic for both the entity and, in some cases, the safety of its customers. Moreover, a given legacy code base 112 may be relatively large, with a complex dependency graph. Consequently, there is often hesitation on the part of the entity 110 running the software system to update its legacy code base 112.

Code knowledge system 102 may be configured to leverage knowledge of past code base updates or "migrations" in order to streamline the process of updating a legacy code base underlying an entity's software system. For example, code knowledge system 102 may be configured to recommend specific changes to various pieces of source code as part of a migration. In some implementations, code knowledge system 102 may even implement source code changes automatically, e.g., if there is sufficient confidence in a proposed source code change.

In various implementations, code knowledge system 102 may include a machine learning ("ML" in Fig. 1) database 104 that includes data indicative of one or more trained machine learning models 106_{1-N}. These trained machine learning models 106_{1-N} may take various forms that will be described in more detail below, including but not limited to a graph neural network ("GNN"), a sequence-to-sequence model such as various flavors of a recurrent neural network *(e.g.,* long short-term memory, or "LSTM", gate recurrent units, or "GRU", *etc.*) or an encoder-decoder, and any other type of machine learning model that may be applied to facilitate selected aspects of the present disclosure.

In some implementations, code knowledge system 102 may also have access to one or more up-to-date code bases 108_{1-M}. In some implementations, these up-to-date code bases 108_{1-M} may be used, for instance, to train one or more of the machine learning models 106_{1-N}. In some such implementations, and as will be described in further detail below, the up-to-date code bases 108_{1-M} may be used in combination with other data to train machine learning models 106_{1-N}, such as non-up-to-date code bases (not depicted) that were updated to yield up-to-date code bases 108_{1-M}. "Up-to-date" as used herein is not meant to require that all the source code in the code base be the absolute latest version. Rather, "up-to-date" may refer to a desired state of a code base, whether that desired state is the most recent version code base, the most recent version of the code base that is considered "stable," the most recent version of the code base that meets some other criterion (e.g., dependent on a particular library, satisfies some security protocol or standard), etc.

In various implementations, a client 110 that wishes to update its legacy code base 112 may establish a relationship with an entity (not depicted in Fig. 1) that hosts code knowledge system 102. In some implementations, host knowledge system 102 may then obtain all or parts of the client's legacy source code base 112, e.g., over one or more networks 114 such as the Internet, and return to the client 110 data indicative of recommended changes, or even updated source code. In other implementations, e.g., where the client's legacy code base 112 being updated is massive, one or more representatives of the entity that hosts code knowledge system 102 may travel to the client's site(s) to perform updates and/or make recommendations.

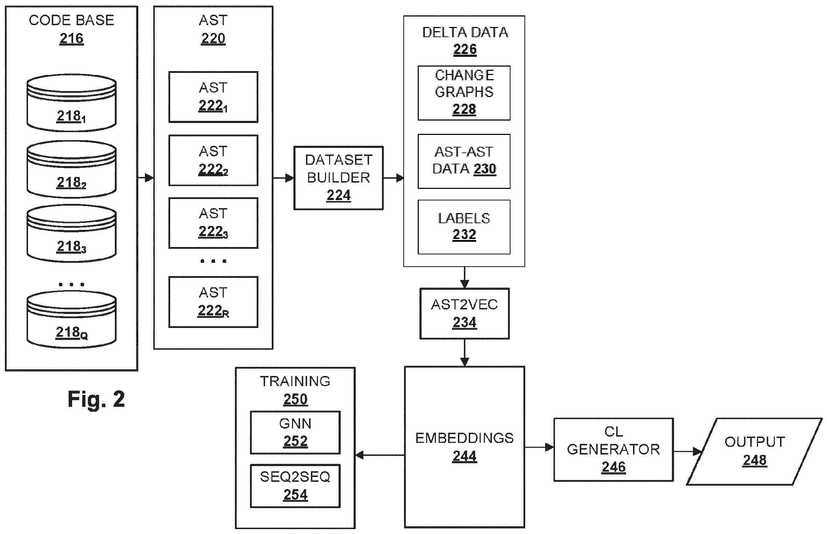

Fig. 2 is a block diagram of example process flow(s) that may be implemented in whole or in part by code knowledge system 102, during training of machine learning models 106_{1-N} and/or during use of those models ("inference") to predict what changes should/can be made to a legacy code base 112. Training will be discussed first, followed by inference. Unless otherwise indicated, various components in Fig. 2 may be implemented using any combination of hardware and computer-readable instructions.

Beginning at the top left, a codebase 216 may include one or more source code snippets 218_{1-Q} of one or more types. For example, in some cases a first source code snippet 218₁ may be written in Python, another source code snippet 218₂ may be written in Java, another 218₃ in C/C++, and so forth. Additionally or alternatively, each of elements 218_{1-Q} may represent one or more source code snippets from a particular library, entity, and/or application programming interface ("API"). Each source code snippet 218 may comprise a subset of a source code file or an entire source code file, depending on the circumstances. For example, a particularly large source code file may be broken up into smaller snippets (e.g., delineated into functions, objects, etc.), whereas a relatively short source code file may be kept intact throughout processing.

At least some of the source code snippets 218_{1-Q} of code base 112 may be converted into an alternative form, such as a graph or tree form, in order for them to be subjected to additional processing. For example, in Fig. 2, source code snippets 218_{1-Q} are processed to generate abstract syntax trees ("AST") 222_{1-R}. Q and R may both be positive integers that may or may not be equal to each other. As noted previously, an AST may represent constructs occurring in a given source code snippet, such as variables, objects, functions, etc., as well as the syntactic relationships between these components. In some implementations, during training, ASTs 220 may include a first AST for a first version of a source code snippet (e.g., the "to-be-updated" version), another AST for a second version of the source code snippet (e.g., the "target version"), and a third AST that conveys the difference(s) between the first source code snippet and the second source code snippet.

A dataset builder 224, which may be implemented using any combination of hardware and machine-readable instructions, may receive the ASTs 222_{1-R} as input and generate, as output, various different types of data that may be used for various purposes in downstream processing. For example, in Fig. 2, dataset builder 224 generates, as "delta data" 226, change graphs 228, AST-AST data 230, and change labels 232. Change graphs 228-which as noted above may themselves take the form of ASTs-may include one or more change graphs generated from one or more pairs of ASTs generated from respective pairs of to-be-updated/target source code snippets. Put another way, each source code snippet 218 may be mapped to an AST 222. Pairs of ASTs, one representing a first version of a source code snippet and another representing a second version of the source code snippet, may be mapped to a change graph 228. Each change graph 228 therefore represents one or more changes made to update a source code snippet from a first (to-be-updated) version to a second (target) version. In some implementations, a distinct change graph may be generated for each change to the source code snippet during its evolution from the first version to the second version.

Change type labels 232 may include labels that are assigned to change graphs 228 for training purposes. Each label may designate a type of change that was made to the source code snippet that underlies the change graph under consideration. For example, each of change graphs 228 may be labeled with a respective change type of change type labels 232. The respective change types may be used to map the changes conveyed by the change graphs 228 to respective regions in a latent space. For example, a label "change variable name" may be applied to one change of a source code snippet, another label, "change function name," may be applied to another change of another source code snippet, and so on.

An AST2VEC component 234 may be configured to generate, from delta data 226, one or more feature vectors, i.e. "latent space" embeddings 244. For example, AST2VEC component 234 may apply change graphs 228 as input across one or more machine learning models to generate respective latent space embeddings 244. The machine learning models may take various forms as described previously, such as a GNN 252, a sequence-to-sequence model 254 (e.g., an encoder-decoder), *etc.*

During training, a training module 250 may train a machine learning model such as GNN 252 or sequence-to-sequence model 254 to generate embeddings 244 based directly or indirectly on source code snippets 218_{1-Q}. These embeddings 244 may capture semantic and/or syntactic properties of the source code snippets 218_{1-Q}, as well as a context in which those snippets are deployed. In some implementations, as multiple change graphs 228 are input across the machine learning model (particularly GNN 252), the change type labels 232 assigned to them may be used as part of a loss function that determines whether comparable changes are clustering together properly in the latent space. If an embedding generated from a change of a particular change type (*e.g.*, "change variable name") is not sufficiently proximate to other embeddings of the same change type (e.g., is closer to embeddings of other change types), GNN 252 may be trained, *e.g.*, using techniques such as gradient descent and back propagation. This training process may be repeated over numerous training examples until GNN 252 is able to accurately map change graphs, and more generally, data structures representing source code snippets, to regions in the latent space near other, syntactically/semantically similar data structures.

With GNN 252 in particular, the constituent ASTs of delta data 226, which recall were generated from the source code snippets and may include change graphs in the form of ASTs, may be operated on as follows. Features (which may be manually selected or learned during training) may be extracted for each node of the AST to generate a feature vector for each node. Recall that nodes of the AST may represent a variable, object, or other programming construct. Accordingly, features of the feature vectors generated for the nodes may include features like variable type *(e.g.,* int, float, string, pointer, *etc*.), name, operator(s) that act upon the variable as operands, etc. A feature vector for a node at any given point in time may be deemed that node's "state."

Meanwhile, each edge of the AST may be assigned a machine learning model, e.g., a particular type of machine learning model or a particular machine learning model that is trained on particular data. For example, edges representing "if" statements may each be assigned a first neural network. Edges representing "else" statements also may each be assigned the first neural network. Edges representing conditions may each be assigned a second neural network. And so on.

Then, for each time step of a series of time steps, feature vectors, or states, of each node may be propagated to their neighbor nodes along the edges/machine learning models, *e.g.*, as projections into latent space. In some implementations, incoming node states to a given node at each time step may be summed (which is order-invariant), *e.g.*, with each other and the current state of the given node. As more time steps elapse, a radius of neighbor nodes that impact a given node of the AST increases.

Intuitively, knowledge about neighbor nodes is incrementally "baked into" each node's state, with more knowledge about increasingly remote neighbors being accumulated in a given node's state as the machine learning model is iterated more and more. In some implementations, the "final" states for all the nodes of the AST may be reached after some desired number of iterations is performed. This number of iterations may be a hyper-parameter of GNN 252. In some such implementations, these final states may be summed to yield an overall state or embedding (*e.g.*, 244) of the AST.

In some implementations, for change graphs 228, edges and/or nodes that form part of the change may be weighted more heavily during processing using GNN 252 than other edges/nodes that remain constant across versions of the underlying source code snippet. Consequently, the change(s) between the versions of the underlying source code snippet may have greater influence on the resultant state or embedding representing the whole of the change graph 228. This may facilitate clustering of embeddings generated from similar changes in the latent space, even if some of the contexts surrounding these embeddings differ somewhat.

For sequence-to-sequence model 254, training may be implemented using implicit labels that are manifested in a sequence of changes to the underlying source code. Rather than training on source and target ASTs, it is possible to train using the entire change path from a first version of a source code snippet to a second version of the source code snippet. For example, sequence-to-sequence model 254 may be trained to predict, based on a sequence of source code elements (e.g., tokens, operators, etc.), an "updated" sequence of source code elements that represent the updated source code snippet. In some implementations, both GNN 252 and sequence-to-sequence model 254 may be employed, separately and/or simultaneously.

Once the machine learning models (*e.g.*, 252-254) are adequately trained, they may be used during an inference phase to help new clients migrate their yet-to-be-updated code bases. Again starting at top left, code base 216 may now represent a legacy code base 112 of a client 110. Unlike during training, during inference, code base 216 may only include legacy source code that is to be updated. However, much of the other operations of Fig. 2 operate similarly as in training.

The to-be-updated source code snippets 218_{1-Q} are once again used to generate ASTs 222_{1-R}. However, rather than the ASTs 222_{1-R} being processed by dataset builder 224, they may simply be applied, *e.g.*, by AST2VEC component 234 as input across one or more of the trained machine learning models (e.g., 252, 254) to generate new source code embeddings 244 in latent space. Then, one or more reference embeddings in the latent space may be identified, *e.g.*, by a changelist ("CL") generator 246, based on respective distances between the one or more reference embeddings and the new source code embedding in the latent space. As noted above, each of the one or more reference embeddings may have generated previously, *e.g.*, by training module 250, by applying data indicative of a change, made to a reference first version source code snippet to yield a reference second version source code snippet, as input across one or more of the machine learning models (*e.g.*, 252-254).

Based on the identified one or more reference embeddings, CL generator 246 may identify one or more changes to be made to to-be-updated source code snippet(s) to create updated source code snippet(s). These recommended code changes (e.g., generated, changed code from to-be-changed code) may be output at block 248. Additionally or alternatively, in some implementations, if a code change recommendation is determined with a sufficient measure of confidence, the code change recommendation may be effected without input from a user. In yet other implementations, a code change recommendation may be implemented automatically in response to other events, such as one or more passing automatic code unit tests.

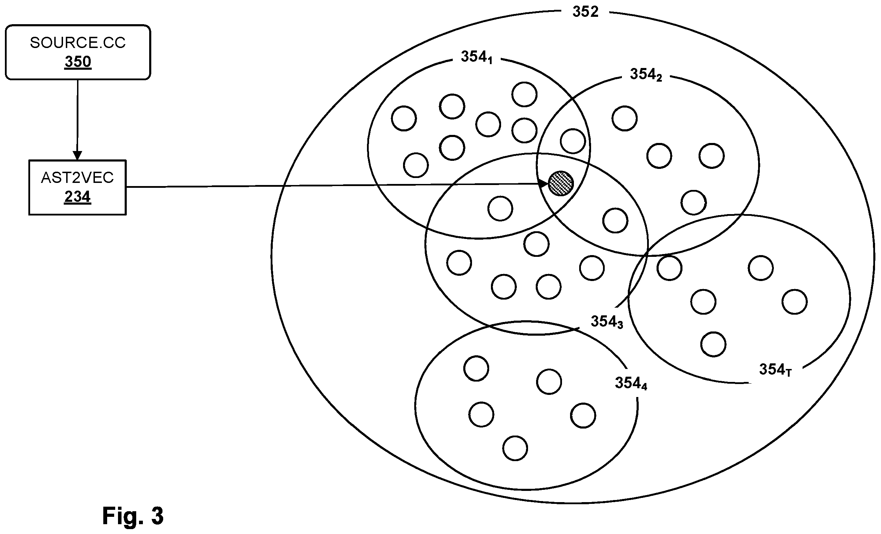

Fig. 3 demonstrates one example of how a source code snippet 350 may be embedded in latent space 352. A source code snippet, source.cc 350, is processed using various undepicted components of Fig. 2 until its AST reaches AST2VEC component 234. As described previously, AST2VEC component 234 applies the AST generated from source.cc 350 across one or more machine learning models, such as GNN 252, to create an embedding (represented by the dark circle in Fig. 3) into latent space 352.

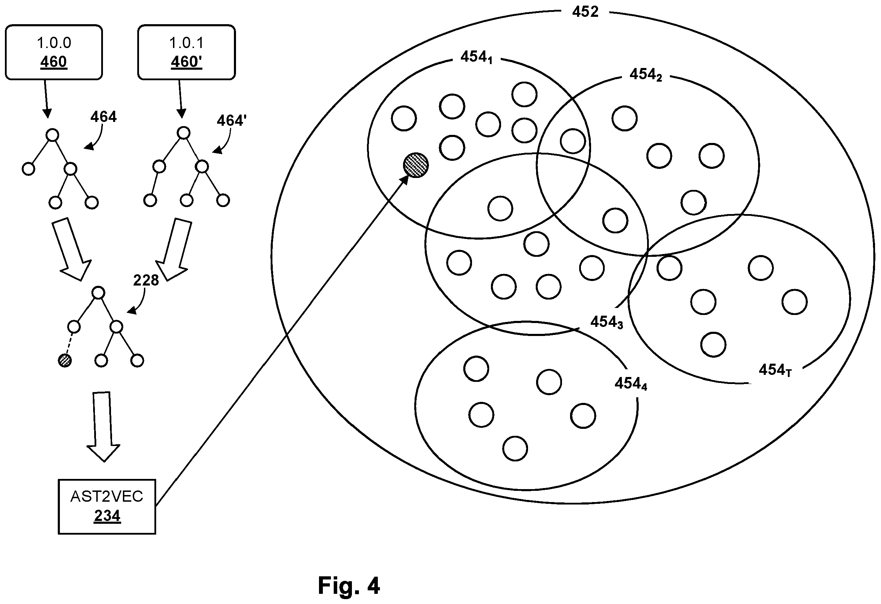

In the example of Fig. 3, the training process described previously has been used to learn mappings to regions 354_{1-T} of latent space 352 that correspond to change types. T may be a positive integer equal to the number of distinct change type labels 232 applied to change graphs 228 in Fig. 2 during training. For example, a first region 354₁ may correspond to a first change type, *e.g.*, "change variable name." A cluster of reference embeddings (small circles in Fig. 3) generated from change graphs representing changes to variable names in source code snippets may reside in first region 354₁. A second region 354₂ may correspond to a second change type, *e.g.*, "change function name." Another cluster of reference embeddings generated from change graphs representing changes to function names in source code snippets may reside in second region 354₂. And so on. These regions 354 (and 454 in Fig. 4) may be defined in various ways, such as by using through the largest enclosing circle, or "convex hull," of all existing/known embeddings for a certain change type.

In the example of Fig. 3, source.cc 350 is a to-be-updated source code snippet, *e.g.*, for a particular client 110. It is entirely possible that the embedding (darkened dot in Fig. 3) generated from source.cc 350 will be proximate in latent space 352 to multiple different change types. That may be because the same or similar source code snippet, when previously updated, included multiple types of changes. Thus, in the example of Fig. 3, an embedding generated from source.cc 350 may simultaneously map to first region 354₁, second region 354₂, and to a third region 354₃, as demonstrated by the location of the dark dot within the intersection of regions 351₁₋₃.

To determine which changes to make and/or recommend, in various implementations, one or more reference embeddings (small circles in Fig. 3) in latent space 352 may be identified based on one or more distances between the one or more reference embeddings and the new source code embedding (dark small circle) in latent space 352. These distances, or "similarities," may be computed in various ways, such as with cosine similarity, dot products, *etc*. In some implementations, the reference embedding(s) that are closest to the new source code embedding may be identified and used to determine a corresponding source code edit.

For example, in some implementations, each reference embedding may be associated, *e.g.*, in a lookup table and/or database, with one or more source code changes that yielded that reference embedding. Suppose the closest reference embedding in the change variable name region 354₁ is associated with a source code change that replaced the variable name "var1" with "varA." In some implementations, a recommendation may be generated and presented, e.g., as audio or visual output, that recommends adopting the same change for the to-be-updated source code base. In some implementations, this output may convey the actual change to be made to the code, and/or comments related to the code change.

In some implementations, a measure of confidence in such a change may be determined, *e.g.*, with a shorter distance between the new source code embedding and the closest reference embedding corresponding to a greater confidence. In some such implementations, if the measure of confidence is significantly large, e.g., satisfies one or more thresholds, then the change may be implemented automatically, without first prompting a user.

Fig. 4 depicts one example of how a source code snippet 460 may be used to create a reference embedding and/or to train a machine learning model, such as GNN 252. The to-be-updated first version of source code snippet 460 is, in this example, 1.0.0. The second or "target" version of source code snippet 460' is, in this example, 1.0.1. As shown in Fig. 4, ASTs 464, 464' may be generated, respectively, from the first and second versions of the source code snippet, 460, 460'. Assume for this example that the only change to the source code snippet between 1.0.0 and 1.0.1 is the changing of a variable name, as reflected in the addition of a new node at bottom left of AST 464'.

ASTs 464, 464' may be compared, e.g., by dataset builder 224, to generate a change graph 228 that reflects this change. Change graph 228 may then be processed, e.g., by AST2VEC 234 using a machine learning model such as GNN 252 and/or sequence-to-sequence model 254, to generate a latent space embedding as shown by the arrow. In this example, the latent space embedding falls with a region 454₁ of latent space 452 in which other reference embeddings (represented in Fig. 4 again by small circles) that involved variable name changes are also found.

As part of training the machine learning model, in some implementations, data indicative of a change between a first version source code snippet and a second version source code snippet, *e.g.*, change graph 228, may be labeled (with 232) with a change type. Change graph 228 may then be applied, *e.g.*, by AST2VEC component 234, as input across a machine learning model (*e.g.*, 252) to generate a new embedding in latent space 452. Next, a distance in the latent space between the new embedding and a previous (e.g., reference) embedding in the latent space associated with the same change type may be determined and used to train the machine learning model. For example, if the distance is too great-*e.g.*, greater than a distance between the new embedding and a reference embedding of a different change type-then techniques such as back propagation and gradient descent may be applied to alter weight(s) and/or parameters of the machine learning model. Eventually after enough training, reference embeddings of the same change types will cluster together in latent space 452 (which may then correspond to latent space 352 in Fig. 3).

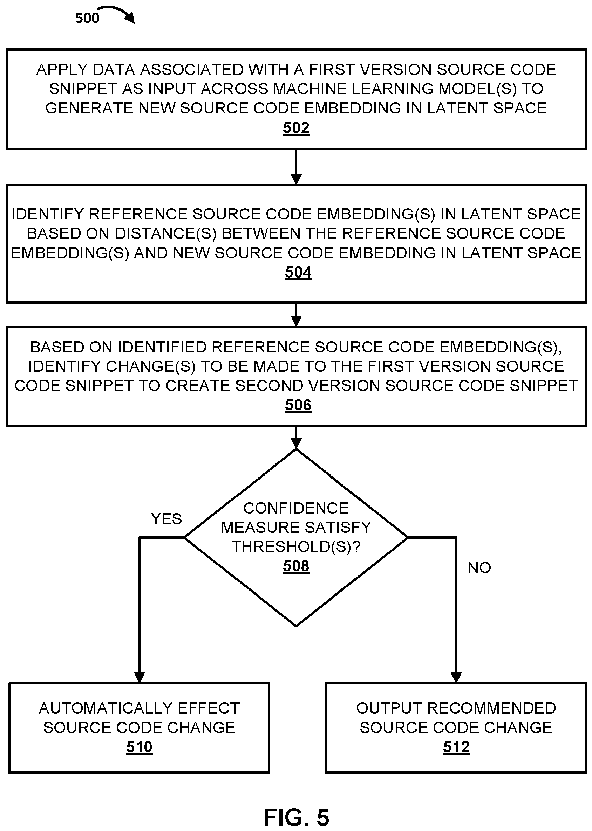

Fig. 5 is a flowchart illustrating an example method 500 of utilizing a trained machine learning model to map to-be-updated source code snippets to a latent space that contains reference embeddings, in accordance with implementations disclosed herein. For convenience, the operations of the flow chart are described with reference to a system that performs the operations. This system may include various components of various computer systems, such as one or more components of code knowledge system 102. Moreover, while operations of method 500 are shown in a particular order, this is not meant to be limiting. One or more operations may be reordered, omitted or added.

At block 502, the system applies data associated with a first version source code snippet *(e.g.,* 350 in Fig. 5) as input across one or more machine learning models *(e.g.,* 252) to generate a new source code embedding in a latent space (*e.g.*, 352). This data associated with the first version source code snippet may include the source code snippet itself, and/or may include another representation of the source code snippet, such as an AST (*e.g.*, 222). In some implementations, the source code snippet may be part of a source code file, or even the entire source code file.

At block 504, the system identifies one or more reference embeddings in the latent space based on one or more distances between the one or more reference embeddings and the new source code embedding in the latent space. As explained previously, each of the one or more reference embeddings may have been generated (*e.g.*, as shown in Fig. 4) by applying data (*e.g.*, 228) indicative of a change made to a reference first version source code snippet (460 in Fig. 4) to yield a reference second version source code snippet (460' in Fig. 4), as input across one or more of the machine learning models. And in various implementations, each reference embedding may be associated, e.g., in a lookup table and/or database, with one or more changes made to source code underlying the reference embedding.

At block 506, the system identifies, based on the identified one or more reference embeddings, one or more changes to be made to the first version source code snippet to create a second version source code snippet. For example, the system may look for the one or more changes associated with the closest reference embedding in the lookup table or database.

At block 508, a confidence measure associated with the identifying of block 506 may be compared to one or more thresholds. This confidence measure may be determined, for instance, based on a distance between the new source code embedding and the closest reference embedding in latent space. For example, in some implementations, the confidence measure-or more generally, a confidence indicated by the confidence measure-may be inversely related to this distance.

If at block 508 the confidence measure satisfies the threshold(s), then method may proceed to block 510, at which point the one or more changes identified at block 506 may be implemented automatically. However, at block 508, if the confidence measure fails to satisfy the threshold(s), then at block 512, the system may generate data that causes one or more computing devices, *e.g.*, operated by a client 110, to recommend the code change. In some such implementations, the client may be able to "accept" the change, *e.g.*, by pressing a button on a graphical user interface or by speaking a confirmation. In some implementations, acceptance of a recommended code change may be used to further train one or more machine learning models described herein, e.g., GNN 252 or sequence-to-sequence model 254.

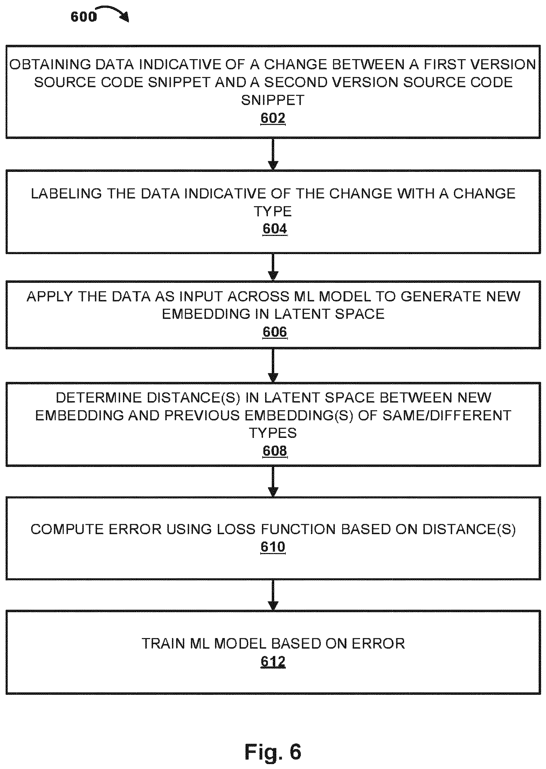

Fig. 6 is a flowchart illustrating an example method 600 of training a machine learning model such as GNN 252 to map to-be-updated source code snippets to a latent space that contains reference embeddings, in accordance with implementations disclosed herein. For convenience, the operations of the flow chart are described with reference to a system that performs the operations. This system may include various components of various computer systems, such as one or more components of code knowledge system 102. Moreover, while operations of method 600 are shown in a particular order, this is not meant to be limiting. One or more operations may be reordered, omitted or added.

At block 602, the system may obtain data indicative of a change between a first version source code snippet and a second version source code snippet. For example, a change graph 228 may be generated, *e.g.*, by dataset builder 224, based on a first version source code snippet 460 and a second (or "target") version source code snippet 460'. At block 604, the system, *e.g.*, by way of dataset builder 224, may label the data indicative of the change with a change type label (*e.g.*, 232 in Fig. 2).

At block 606, the system may apply the data indicative of the change (*e.g.*, change graph 228) as input across a machine learning model, *e.g.*, GNN 252, to generate a new embedding in a latent space (*e.g.*, 452). At block 608, the system may determine distance(s) in the latent space between the new embedding and previous embedding(s) in the latent space associated with the same and/or different change types. These distances may be computed using techniques such as cosine similarity, dot product, *etc*.

At block 610, the system may compute an error using a loss function and the distance(s) determined at block 608. For example, if a new embedding having a change type "change variable name" is closer to previous embedding(s) of the type "change function name" than it is to previous embeddings of the type "change variable name," that may signify that the machine learning model that generated the new embedding needs to be updated, or trained. Accordingly, at block 612, the system may train the machine learning model based at least in part on the error computed at block 610. The training of block 612 may involve techniques such as gradient descent and/or back propagation. Additionally or alternatively, in various implementations, other types of labels and/or training techniques may be used to train the machine learning model, such weak supervision or triplet loss, which may include the use of labels such as similar/dissimilar or close/not close.

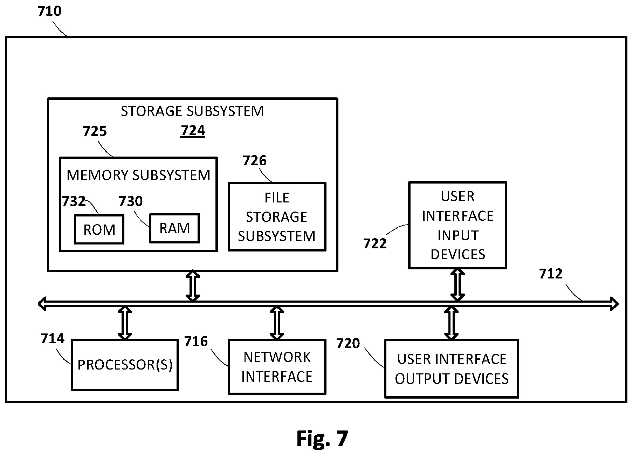

Fig. 7 is a block diagram of an example computing device 710 that may optionally be utilized to perform one or more aspects of techniques described herein. Computing device 710 typically includes at least one processor 714 which communicates with a number of peripheral devices via bus subsystem 712. These peripheral devices may include a storage subsystem 724, including, for example, a memory subsystem 725 and a file storage subsystem 726, user interface output devices 720, user interface input devices 722, and a network interface subsystem 716. The input and output devices allow user interaction with computing device 710. Network interface subsystem 716 provides an interface to outside networks and is coupled to corresponding interface devices in other computing devices.

User interface input devices 722 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computing device 710 or onto a communication network.

User interface output devices 720 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 710 to the user or to another machine or computing device.

Storage subsystem 724 stores programming and data constructs that provide the functionality of some or all of the modules described herein. For example, the storage subsystem 724 may include the logic to perform selected aspects of the method of Figs. 5-6, as well as to implement various components depicted in Figs. 1-2.

These software modules are generally executed by processor 714 alone or in combination with other processors. Memory 725 used in the storage subsystem 724 can include a number of memories including a main random access memory (RAM) 730 for storage of instructions and data during program execution and a read only memory (ROM) 732 in which fixed instructions are stored. A file storage subsystem 726 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 726 in the storage subsystem 724, or in other machines accessible by the processor(s) 714.

Bus subsystem 712 provides a mechanism for letting the various components and subsystems of computing device 710 communicate with each other as intended. Although bus subsystem 712 is shown schematically as a single bus, alternative implementations of the bus subsystem may use multiple busses.

Computing device 710 can be of varying types including a workstation, server, computing cluster, blade server, server farm, or any other data processing system or computing device. Due to the ever-changing nature of computers and networks, the description of computing device 710 depicted in Fig. 7 is intended only as a specific example for purposes of illustrating some implementations. Many other configurations of computing device 710 are possible having more or fewer components than the computing device depicted in Fig. 7.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example only and that, within the scope of the appended claims implementations may be practiced otherwise than as specifically described and claimed. Implementations of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

## Claims

1. A method implemented using one or more processors, comprising:
applying (502) data (222_{1-R}) associated with a first version source code snippet (218_{1-Q}) as input across one or more machine learning models to generate a new source code embedding (244) in a latent space;
identifying (504) one or more reference embeddings in the latent space based on one or more distances between the one or more reference embeddings and the new source code embedding in the latent space, wherein each of the one or more reference embeddings is generated by applying data indicative of a change made to a reference first version source code snippet to yield a reference second version source code snippet, as input across one or more of the machine learning models;
based on the identified one or more reference embeddings, identifying (506) one or more changes to be made to the first version source code snippet to create a second version source code snippet; and
automatically effecting the one or more changes in the first version source code snippet, or generating output to be rendered on one or more computing devices, wherein the output, when rendered, recommends that the one or more changes be considered for the first version source code snippet.

2. The method of claim 1, wherein the data associated with the first version source code snippet comprises an abstract syntax tree, AST, generated from the first version source code snippet and/or wherein the first version source code snippet comprises a source code file.

3. The method of any of claims 1-2, wherein one or more of the machine learning models comprises a graph neural network, GNN.

4. The method of any of claims 1-3, wherein the one or more changes are associated in one or more lookup tables with the one or more reference embeddings, wherein the one or more changes are identified by looking in the one or more lookup tables for the one or more changes associated with the one or more reference embeddings.

5. The method of any of claims 1-4, comprising automatically effecting the one or more changes in the first version source code snippet responsive to a determination that there is sufficient confidence in the one or more changes.

6. The method of any of claims 1-4, comprising:
responsive to determining (508) that a measure of confidence associated with the identification of the one or more changes satisfies a threshold, automatically effecting (510) the one of the one or more changes in the first version source code snippet; and
responsive to determining (508) that the measure of confidence associated with the identification of the one or more changes does not satisfy a threshold, generating (512) output to be rendered on one or more computing devices, wherein the output, when rendered, recommends that the one or more changes be considered for the first version source code snippet.

7. The method of claim 6, wherein the one or more reference embeddings are identified based on one or more cosine similarities between the one or more reference embeddings and the new source code embedding in latent space, and wherein the measure of confidence is determined based on the cosine similarity in latent space between the reference embedding that corresponds to the one of the one or more identified changes and the new source code embedding in latent space.

8. The method of any of claims 1 to 7, wherein each of the reference embeddings was generated prior to the applying of the data associated with the first version source code as input across one or more machine learning models.

9. A system comprising one or more processors and memory storing instructions that, in response to execution of the instructions by the one or more processors, cause the one or more processors to:
apply (502) data associated with a first version source code snippet as input across one or more machine learning models to generate a new source code embedding in a latent space;
identify (504) one or more reference embeddings in the latent space based on one or more distances between the one or more reference embeddings and the new source code embedding in the latent space, wherein each of the one or more reference embeddings is generated by applying data indicative of a change, made to a reference first version source code snippet to yield a reference second version source code snippet, as input across one or more of the machine learning models;
based on the identified one or more reference embeddings, identify (506) one or more changes to be made to the first version source code snippet to create a second version source code snippet; and
automatically effect (510) the one or more changes in the first version source code snippet or generate output to be rendered on one or more computing devices, wherein the output, when rendered, recommends that the one or more changes be considered for the first version source code snippet.

10. The system of claim 9, wherein the data associated with the first version source code snippet comprises an abstract syntax tree, AST, generated from the first version source code snippet and/or wherein one or more of the machine learning models comprises a graph neural network, GNN.

11. The system of any of claims 9-10, wherein the one or more changes are associated in one or more lookup tables with the one or more reference embeddings, wherein the one or more changes are identified by looking in the one or more lookup tables for the one or more changes associated with the one or more reference embeddings.

12. The system of any of claims 9-11, wherein execution of the instructions by the one or more processors causes the one or more processors to:
generate output to be rendered on one or more computing devices, wherein the output, when rendered, recommends that the one or more changes be considered for the first version source code snippet responsive to determining (508) that the measure of confidence associated with the identification of the one or more changes does not satisfy a threshold; and
automatically effect the one or more changes in the first version source code snippet responsive to determining (508) that a measure of confidence associated with the identification of the one or more changes satisfies a threshold.

13. The system of any of claims 9 to 11, wherein execution of the instructions by the one or more processors causes the one or more processors to automatically effect the one or more changes in the first version source code snippet responsive to a determination that there is sufficient confidence in the one or more changes.

14. The system of any of claims 9-13, wherein the first version source code snippet comprises a source code file.

15. One or more non-transitory computer readable storage media storing computer instructions which, when executed by one or more processors, cause the one or more processors to perform the method of any one of claims 1 to 8.

## Patentansprüche

1. Verfahren, implementiert unter Nutzung eines oder mehrerer Prozessoren, umfassend:
Anwenden (502) von Daten (222_{1-R}), die mit einem Quellcodeausschnitt der ersten Version (218_{1-Q}) als Eingabe in einem oder mehreren Maschinenlernmodellen assoziiert sind, um eine neue Quellcode-Einbettung (244) in einem latenten Raum zu erzeugen;
Identifizieren (504) einer oder mehrerer Referenzeinbettungen in dem latenten Raum basierend auf einem oder mehreren Abständen zwischen der einen oder mehreren Referenzeinbettungen und der neuen Quellcode-Einbettung in dem latenten Raum, wobei jede der einen oder der mehreren Referenzeinbettungen durch Anwenden von Daten, die auf eine Änderung hinweisen, die an einem Referenz-Quellcodeausschnitt der ersten Version vorgenommen wurde, um einen Referenz-Quellcodeausschnitt der zweiten Version als Eingabe über eines oder mehrere der Maschinenlernmodelle zu erhalten, erzeugt wird;
basierend auf dem Identifizieren einer oder mehrerer Referenzeinbettungen, Identifizieren (506) einer oder mehrerer Änderungen, die an dem Quellcodeausschnitt der ersten Version vorgenommen werden sollen, um einen Quellcodeausschnitt der zweiten Version zu erstellen; und
automatisches Bewirken der einen oder der mehreren Änderungen in dem Quellcodeausschnitt der ersten Version oder Erzeugen einer Ausgabe, die auf einer oder mehreren Computergeräten wiedergegeben wird, wobei die Ausgabe, wenn sie wiedergegeben wird, empfiehlt, dass die eine oder die mehreren Änderungen für den Quellcodeausschnitt der ersten Version in Betracht gezogen werden.

2. Verfahren nach Anspruch 1, wobei die Daten, die mit dem Quellcodeausschnitt der ersten Version assoziiert sind, einen abstrakten Syntaxbaum (AST) umfassen, der aus dem Quellcodeausschnitt der ersten Version erzeugt wurde und/oder wobei der Quellcodeausschnitt der ersten Version eine Quellcodedatei umfasst.

3. Verfahren nach einem der Ansprüche 1 bis 2, wobei eines oder mehrere der Maschinenlernmodelle ein neuronales Graphennetzwerk (GNN) umfassen.

4. Verfahren nach einem der Ansprüche 1 bis 3, wobei die eine oder die mehreren Änderungen in einer oder mehreren Nachschlagetabellen der einen oder den mehreren Referenzeinbettungen assoziiert sind, wobei die eine oder die mehreren Änderungen identifiziert werden durch Suchen in der einen oder den mehreren Nachschlagetabellen für die eine oder die mehreren Änderungen, die mit der einen oder den mehreren Referenzeinbettungen assoziiert sind.

5. Verfahren nach einem der Ansprüche 1 bis 4, umfassend ein automatisches Bewirken der einen oder den mehreren Änderungen in dem Quellcodeausschnitt der ersten Version in Reaktion auf eine Bestimmung, dass ein ausreichendes Vertrauen in die eine oder die mehreren Änderungen vorhanden ist.

6. Verfahren nach einem der Ansprüche 1 bis 4 umfassend:
in Reaktion auf das Ermitteln (508), dass ein Konfidenzmaß, das mit der Identifizierung der einen oder den mehreren Änderungen assoziiert ist, einen Schwellenwert erfüllt, automatisches Bewirken (510) der einen der einen oder der mehreren Änderungen in dem Quellcodeausschnitt der ersten Version; und
in Reaktion auf das Ermitteln (508), dass das Konfidenzmaß, das mit der Identifizierung der einen oder den mehreren Änderungen assoziiert ist, einen Schwellenwert nicht erfüllt, Erzeugen (512) einer Ausgabe, die auf einem oder mehreren Computergeräten wiedergegeben wird, wobei die Ausgabe, wenn sie wiedergegeben wird, empfiehlt, dass die eine oder die mehreren Änderungen für den Quellcodeausschnitt der ersten Version berücksichtigt werden.

7. Verfahren nach Anspruch 6, wobei die eine oder die mehreren Referenzeinbettungen basierend auf einer oder mehreren Cosinus-Ähnlichkeiten zwischen der einen oder den mehreren Referenzeinbettungen und der neuen Quellcode-Einbettung im latenten Raum identifiziert werden, und wobei das Konfidenzmaß basierend auf der Cosinus-Ähnlichkeit im latenten Raum zwischen der Referenzeinbettung, die der einen der einen oder den mehreren identifizierten Änderungen entspricht, und der neuen Quellcode-Einbettung im latenten Raum ermittelt wird.

8. Verfahren nach einem der Ansprüche 1 bis 7, wobei jede der Referenzeinbettungen vor dem Anwenden der Daten, die mit dem Quellcode der ersten Version als Eingabe für ein oder mehrere Maschinenlernmodelle assoziiert sind, erzeugt wurde.

9. System, umfassend einen oder mehrere Prozessoren und einen Speicher, der Anweisungen speichert, die in Reaktion auf die Ausführung der Anweisungen durch den einen oder die mehreren Prozessoren den einen oder die mehreren Prozessoren veranlassen zum:
Anwenden (502) von Daten, die mit einem Quellcodeausschnitt der ersten Version als Eingabe in einem oder mehreren Maschinenlernmodellen assoziiert sind, um eine neue Quellcode-Einbettung in einem latenten Raum zu erzeugen;
Identifizieren (504) einer oder mehrerer Referenzeinbettungen in dem latenten Raum basierend auf einem oder mehreren Abständen zwischen der einen oder mehreren Referenzeinbettungen und der neuen Quellcode-Einbettung in dem latenten Raum, wobei jede der einen oder der mehreren Referenzeinbettungen durch Anwenden von Daten, die auf eine Änderung hinweisen, die an einem Referenz-Quellcodeausschnitt der ersten Version vorgenommen wurde, um einen Referenz-Quellcodeausschnitt der zweiten Version als Eingabe über eines oder mehrere der Maschinenlernmodelle zu erhalten, erzeugt wird;
basierend auf dem Identifizieren einer oder mehrerer Referenzeinbettungen, Identifizieren (506) einer oder mehrerer Änderungen, die an dem Quellcodeausschnitt der ersten Version vorgenommen werden sollen, um einen Quellcodeausschnitt der zweiten Version zu erstellen; und
automatisches Bewirken (510) der einen oder der mehreren Änderungen in dem Quellcodeausschnitt der ersten Version oder Erzeugen einer Ausgabe, die auf einer oder mehreren Computergeräten wiedergegeben wird, wobei die Ausgabe, wenn sie wiedergegeben wird, empfiehlt, dass die eine oder die mehreren Änderungen für den Quellcodeausschnitt der ersten Version in Betracht gezogen werden.

10. System nach Anspruch 9, wobei die Daten, die mit dem Quellcodeausschnitt der ersten Version121087EP1 Rule 71(3) & Druckexemplar 15.03.2024ion assoziiert sind, einen abstrakten Syntaxbaum (AST) umfassen, der aus dem Quellcodeausschnitt der ersten Version erzeugt wurde und/oder wobei eines oder mehrere der Maschinenlernmodelle ein neuronales Netzwerk (GNN) umfassen.

11. System nach einem der Ansprüche 9 bis 10, wobei die eine oder die mehreren Änderungen in einer oder mehreren Nachschlagetabellen der einen oder den mehreren Referenzeinbettungen assoziiert sind, wobei die eine oder die mehreren Änderungen identifiziert werden durch Suchen in der einen oder den mehreren Nachschlagetabellen für die eine oder die mehreren Änderungen, die mit der einen oder den mehreren Referenzeinbettungen assoziiert sind.

12. System nach einem der Ansprüche 9 bis 11, wobei die Ausführung der Anweisungen durch den einen oder die mehreren Prozessoren, den einen oder die mehreren Prozessoren veranlassen zum:
Erzeugen einer Ausgabe, die auf einem oder mehreren Computergeräten wiedergegeben werden soll, wobei die Ausgabe, wenn sie wiedergegeben wird, empfiehlt, dass die eine oder die mehreren Änderungen für den Quellcodeausschnitt der ersten Version berücksichtigt werden, in Reaktion auf das Ermitteln (508), dass das Konfidenzmaß, das mit der Identifizierung der einen oder der mehreren Änderungen assoziiert ist, einen Schwellenwert nicht erfüllt; und
Automatisches Bewirken der einen oder der mehreren Änderungen in dem Quellcodeausschnitt der ersten Version in Reaktion auf das Ermitteln (508), dass ein Konfidenzmaß, das mit der Identifizierung der einen oder der mehreren Änderungen assoziiert ist, einen Schwellenwert erfüllt.

13. System nach einem der Ansprüche 9 bis 11, wobei die Ausführung der Anweisungen durch den einen oder die mehreren Prozessoren den einen oder die mehreren Prozessoren veranlasst, die eine oder die mehreren Änderungen in dem Quellcodeausschnitt der ersten Version in Reaktion auf eine Bestimmung, dass ein ausreichendes Vertrauen in die eine oder die mehreren Änderungen besteht, automatisch auszuführen.

14. System nach einem der Ansprüche 9 bis 13, wobei der Quellcodeausschnitt der ersten Version eine Quellcodedatei umfasst.

15. Ein oder mehrere nichtflüchtige computerlesbare Speichermedien, auf denen Computeranweisungen gespeichert sind, die, bei Ausführung durch den einen oder die mehreren Prozessoren, den einen oder die mehreren Prozessoren veranlassen, das Verfahren nach einem der Ansprüche 1 bis 8 durchzuführen.

## Revendications

1. Procédé mis en œuvre à l'aide d'un ou de plusieurs processeurs, comprenant :
l'application (502) de données (222_{1-R}) associées à un snippet de code source de première version (218_{1-Q}) comme entrée dans un ou plusieurs modèles d'apprentissage machine afin de générer une intégration de nouveau code source (244) dans un espace latent ;
l'identification (504) d'une ou plusieurs intégrations de référence dans l'espace latent sur la base d'une ou plusieurs distances entre une ou plusieurs intégrations de référence et l'intégration de nouveau code source dans l'espace latent, dans lequel chacune des intégrations de référence est générée en appliquant des données indicatives d'un changement effectué sur un snippet de code source de première version de référence pour produire un snippet de code source de deuxième version de référence, comme entrée sur un ou plusieurs des modèles d'apprentissage machine ;
sur la base des une ou plusieurs intégrations de référence identifiées, l'identification (506) d'un ou plusieurs changements à apporter au snippet de code source de première version pour créer un snippet de code source de deuxième version ; et
le fait d'effectuer automatiquement les un ou plusieurs changements dans le snippet de code source de première version, ou la génération d'une sortie à rendre sur un ou plusieurs dispositifs informatiques, dans lequel la sortie, lorsqu'elle est rendue, recommande que les un ou plusieurs changements soient considérés pour le snippet de code source de première version.

2. Procédé selon la revendication 1, dans lequel les données associées au snippet de code source de première version comprennent un arbre de syntaxe abstraite, AST, généré à partir du snippet de code source de première version et/ou dans lequel le snippet de code source de première version comprend un fichier de code source.

3. Procédé selon l'une quelconque des revendications 1 et 2, dans lequel un ou plusieurs des modèles d'apprentissage machine comprend un réseau neuronal graphique, GNN.

4. Procédé selon l'une quelconque des revendications 1 à 3, dans lequel les un ou plusieurs changements sont associés dans une ou plusieurs tables de consultation avec les une ou plusieurs intégrations de référence, dans lequel les un ou plusieurs changements sont identifiés en consultant dans les une ou plusieurs tables de consultation les un ou plusieurs changements associés aux un ou plusieurs intégrations de référence.

5. Procédé selon l'une quelconque des revendications 1 à 4, comprenant le fait d'effectuer automatiquement les un ou plusieurs changements dans le snippet de code source de première version en réponse à une détermination qu'il y a une confiance suffisante dans les un ou plusieurs changements.

6. Procédé selon l'une quelconque des revendications 1 à 4, comprenant :
en réponse à la détermination (508) qu'une mesure de confiance associée à l'identification des un ou plusieurs changements satisfait un seuil, le fait d'effectuer automatiquement (510) les un ou plusieurs changements dans le snippet de code source de première version ; et
en réponse à la détermination (508) que la mesure de confiance associée à l'identification des un ou plusieurs changements ne satisfait pas un seuil, la génération (512) d'une sortie à rendre sur un ou plusieurs dispositifs informatiques, dans lequel la sortie, lorsqu'elle est rendue, recommande que les un ou plusieurs changements soient considérés pour le snippet de code source de première version.

7. Procédé selon la revendication 6, dans lequel les une ou plusieurs intégrations de référence sont identifiés sur la base d'une ou de plusieurs similitudes cosinusoïdales entre les une ou plusieurs intégrations de référence et l'intégration de nouveau code source dans l'espace latent, et dans lequel la mesure de confiance est déterminée sur la base de la similitude cosinusoïdale dans l'espace latent entre les intégrations de référence qui correspond à l'un des un ou plusieurs changements identifiés et l'intégration de nouveau code source dans l'espace latent.

8. Procédé selon l'une quelconque des revendications 1 à 7, dans lequel chacune des intégrations de référence a été générée avant l'application des données associées au code source de première version comme entrée dans un ou plusieurs modèles d'apprentissage machine.

9. Système comprenant un ou plusieurs processeurs et une mémoire stockant des instructions qui, en réponse à l'exécution des instructions par les un ou plusieurs processeurs, amènent les un ou plusieurs processeurs à :
appliquer (502) des données associées à un snippet de code source de première version comme entrée dans un ou plusieurs modèles d'apprentissage machine afin de générer une intégration de nouveau code source dans un espace latent ;
identifier (504) une ou plusieurs intégrations de référence dans l'espace latent sur la base d'une ou plusieurs distances entre une ou plusieurs intégrations de référence et l'intégration de nouveau code source dans l'espace latent, dans lequel chacune des intégrations de référence est générée en appliquant des données indicatives d'un changement, effectué sur un snippet de code source de première version de référence pour produire un snippet de code source de deuxième version de référence, comme entrée sur un ou plusieurs des modèles d'apprentissage machine ;
sur la base des une ou plusieurs intégrations de référence identifiées, identifier (506) un ou plusieurs changements à apporter au snippet de code source de première version pour créer un snippet de code source de deuxième version ; et
effectuer automatiquement (510) les un ou plusieurs changements dans le snippet de code source de première version, ou générer une sortie à rendre sur un ou plusieurs dispositifs informatiques, dans lequel la sortie, lorsqu'elle est rendue, recommande que les un ou plusieurs changements soient considérés pour le snippet de code source de première version.

10. Système selon la revendication 9, dans lequel les données associées au snippet de code source de première version comprennent un arbre de syntaxe abstraite, AST, généré à partir du snippet de code source de première version et/ou dans lequel un ou plusieurs des modèles d'apprentissage de machine comprennent un réseau neuronal graphique, GNN.

11. Système selon l'une quelconque des revendications 9 et 10, dans lequel les un ou plusieurs changements sont associés dans une ou plusieurs tables de consultation avec les une ou plusieurs intégrations de référence, dans lequel les un ou plusieurs changements sont identifiés en consultant dans les une ou plusieurs tables de consultation les un ou plusieurs changements associés aux un ou plusieurs intégrations de référence.

12. Système selon l'une quelconque des revendications 9 à 11, dans lequel l'exécution des instructions par les un ou plusieurs processeurs amènent les un ou plusieurs processeurs à :
générer une sortie à rendre sur un ou plusieurs dispositifs informatiques, dans lequel la sortie, lorsqu'elle est rendue, recommande que les un ou plusieurs changements soient considérés pour le snippet de code source de première version en réponse à la détermination (508) que la mesure de confiance associée à l'identification des un ou plusieurs changements ne satisfait pas un seuil ; et
effectuer automatiquement les un ou plusieurs changements dans le snippet de code source de première version en réponse à la détermination (508) qu'une mesure de confiance associée à l'identification des un ou plusieurs changements satisfait un seuil.

13. Système selon l'une quelconque des revendications 9 à 11, dans lequel l'exécution des instructions par les un ou plusieurs processeurs amène les un ou plusieurs processeurs à effectuer automatiquement les un ou plusieurs changements dans le snippet de code source de première version en réponse à une détermination qu'il y a suffisamment de confiance dans les un ou plusieurs changements.

14. Système selon l'une quelconque des revendications 9 à 13, dans lequel le snippet de code source de première version comprend un fichier de code source.

15. Un ou plusieurs supports non transitoires lisibles par ordinateur stockant des instructions d'ordinateur qui, lorsqu'elles sont exécutées par un ou plusieurs processeurs, amènent les un ou plusieurs processeurs à réaliser le procédé de l'une quelconque des revendications 1 à 8.
